# EUROPÄISCHE PATENTSCHRIFT

(11) **EP 1 743 832 B1**
(45) Veröffentlichungstag und Bekanntmachung des Hinweises auf die Patenterteilung: **07.11.2007**
(21) Anmeldenummer: 05015290.9
(22) Anmeldetag: 14.07.2005
(51) Int. Cl.: B62M 7/02, B62K 25/28, B62K 11/04

(54) **Motorrad**
motorcycle
motocyclette

(43) Veröffentlichungstag der Anmeldung: 17.01.2007
(60) Teilanmeldung: 07007044.6
(73) Patentinhaber: Bayerische Motoren Werke Aktiengesellschaft, 80809 München (DE)
(72) Erfinder: Theobald, Markus, 85764 München (DE)

(56) Entgegenhaltungen:
- EP-A- 0 290 705
- EP-A- 0 725 004
- EP-A- 0 926 053
- EP-A- 1 081 033
- EP-A- 1 245 423
- EP-A- 1 302 700
- EP-A- 1 382 876
- FR-A- 2 738 544
- GB-A- 229 782
- GB-A- 558 387
- GB-A- 1 567 774
- GB-A- 2 069 949
- US-A- 4 132 281
- US-A- 4 265 330
- US-A- 4 603 754
- US-A- 5 348 112
- US-A1- 2002 063 004
- US-A1- 2003 106 733
- US-A1- 2004 124 031
- US-B1- 6 213 239
- US-B1- 6 397 964

## Beschreibung

Die vorliegende Erfindung betrifft ein Motorrad gemäß dem Oberbegriff des Patentanspruches 1.

### Stand der Technik

Ein Motorrad gemäß dem Oberbegriff des Patentanspruches 1 ist aus der US 4 265 330 bekannt. Dieses Motorrad weist eine Motor-/ Getriebeeinheit mit einer Getriebeausgangswelle auf, die im Getriebegehäuse gelagert ist und die seitlich aus dem Getriebegehäuse heraussteht. An einem Ende der Getriebeausgangswelle ist ein Getriebeausgangsritzel angeordnet, das über eine Kette ein Hinterrad des Motorrads antreibt. Die Getriebeausgangswelle ist als Hohlwelle ausgebildet. Durch die Getriebeausgangswelle hindurch erstreckt sich eine Stange, deren Enden jeweils mit einem Gewinde versehen sind. Die beiden Enden der Stange sind über buchsenartige Schrauben mit Seitenteilen der Motor-/ Getriebeeinheit verschraubt. Auf den buchsenartigen Schrauben sind Lagerschalen angeordnet, an denen eine Hinterradschwinge des Motorrads schwenkbar aufgehängt ist.

Motorräder, bei denen das Getriebeausgangsritzel koaxial zur Schwenkachse der Hinterradschwinge angeordnet ist, sind aus der GB 55 8387, GB 15 67 774, GB 229 782 bekannt.

Aus der EP 1302700 ist ein Motorrad mit einem Motor bekannt, bei dem eine Kupplung vorgesehen ist, die koaxial zur Kurbelwelle des Motors angeordnet ist.

Bei herkömmlichen Motorrädern mit Ketten- bzw. Riementrieb ist das Ritzel, das die Kette bzw. den Antriebsriemen antreibt, üblicherweise mindestens circa 65 mm versetzt in Bezug auf die Achse angeordnet, an der die Hinterradschwinge angelenkt ist. Die Kupplung ist bei herkömmlichen Motorrädern üblicherweise auf der Getriebeeingangswelle angeordnet. In einer Seitenansicht des Motorrads gesehen "überdeckt" die Kupplung somit die Getriebeabtriebswelle. Unter der Getriebeabtriebswelle wird im folgenden die Welle verstanden, auf der das Ritzel angeordnet ist, welches die Kette bzw. den Riemen antreibt, welche bzw. welcher wiederum das Hinterrad antreibt. Üblicherweise befindet sich die Getriebeabtriebswelle vorderhalb der Schwingenachse.

Derartige herkömmliche Motorradkonzepte haben eine ganze Reihe von Nachteilen. Aufgrund des Versatzes von Kettenritzel und Schwingenachse ist ein gewisser Kettendurchhang erforderlich. Insbesondere bei geländegängigen Motorrädern, die einen Federweg von 150 mm und mehr haben, ist ein beträchtlicher Kettendurchhang erforderlich. Bei einem Motorrad mit einem Federweg von 300 mm ist beispielsweise ein Kettendurchhang von etwa 70mm erforderlich.

Ein großer Kettendurchhang führt zu relativ starken Reibungsverluste und erfordert eine spezielle Kettenführung. Bei einem großen Kettendurchhang ergibt sich auch ein hoher Kettenverschleiß. Eine weitere Folge des großen Kettendurchhangs können starke Laufgeräusche durch "Kettenpeitschen" sein. Eine "Kapselung" der Kette ist insbesondere bei großem Kettendurchhang konstruktiv aufwendig.

Ein weiteres Problem herkömmlicher Motorradkonzepte ist darin zu sehen, dass der Ritzeldurchmesser durch den für eine Schwenkbewegung der Schwinge erforderlichen Freigang gegenüber der Schwingenlagerung begrenzt ist. Problematisch ist ferner, dass der Schwingenholm neben bzw. unter dem Zugtrumm der Kette angeordnet ist, was ein relativ großes Stichmaß der Schwingenholme impliziert und im Fall einer Einarmschwinge die Konstruktion sehr aufwendig macht, weil zwischen dem Hinterrad und der Abtriebswelle des Getriebes noch das Motorgehäuse und die Schwingenlagerung mit einem Versatz in Bezug auf die Getriebeabtriebswelle untergebracht werden müssen. Da bei herkömmlichen Motorrädern die Schwingenholme immer zwischen dem oberen und dem unteren Kettentrumm liegen müssen, befindet sich die untere Federbeinanbindung auf einem relativ niedrigen Niveau, was sich wiederum ungünstig auf die Federbeinprogression auswirkt.

Wie bereits erwähnt ist die Kupplung bei herkömmlichen Motorrädern üblicherweise auf der Getriebeeingangswelle angeordnet. Auf der Getriebeeingangswelle treten bereits recht hohe Drehmomente auf. Um diese hohen Drehmomente dauerhaft übertragen zu können, muss die Kupplung relativ groß sein oder im Ölbad laufen. Ölbadkupplungen haben den Nachteil, dass sie zu einer relativ schnellen Verschmutzung des Öls führen können.

Bei herkömmlichen Motorrädern ist auch der Rahmen üblicherweise relativ aufwendig gestaltet. Die Rahmenverbindung zwischen dem Lenkkopf und der hinter der Getriebeabtriebswelle liegenden Schwingenachse muss an dem relativ groß bauenden Kupplungskorb vorbeigeführt werden. Bei herkömmlichen Motorrädern, bei denen die Schwingenachse hinter dem Antriebsritzel angeordnet ist, weist der Rahmen üblicherweise Rahmenrohre auf, die sich unterhalb des Motors am Kupplungsgehäuse vorbei zu den Schwingenanlenkpunkten erstrecken. Derartige Rahmenkonstruktionen implizieren einen ungünstigen Kraftfluss und sind auch relativ schwer und in der Herstellung teuer. Bei derartigen Rahmen gestaltet sich auch die Motormontage relativ schwierig, da der Motor und das Getriebe sehr eng in den Rahmen "eingebettet" sind.

Bereits vor vielen Jahrzehnten wurde erkannt, dass es von Vorteil wäre, wenn man das Antriebsritzel, das zum Antrieb der Kette bzw. des Antriebsriemens vorgesehen ist, koaxial zur Schwingenachse anordnen würde. Konzeptartige Ansätze sind beispielsweise in der US 6 755 272 B2, GB 558 387, FR 2370 625, WO 02/094649 A1 oder der EP 592 655 B1 beschrieben. Bei den dort beschriebenen Motorrädern sitzt das Antriebsritzel aber nicht auf der Getriebeausgangswelle, sondern auf einer separaten Welle, welche über einen Ketten- oder Riemenantrieb von der Getriebeausgangswelle angetrieben wird. Dies ist konstruktiv relativ umständlich und hat sich daher auch nicht durchgesetzt.

In dem von Jürgen Stoffregen verfassten Lehrbuch "Motorradtechnik, 5. Auflage, Vieweg-Verlag, ATZ MTZ-Fachbuch, Seite 295 - 298 ist ebenfalls die Grundidee beschrieben, das Kettenritzel koaxial zur Schwingenachse anzuordnen. Eine konkrete Beschreibung, wie das Kettenritzel angetrieben werden könnte, und wie das Kettenritzel in Bezug auf das Getriebe angeordnet sein soll, liefert Stoffregen jedoch nicht.

Zum technischen Hintergrund kann auch noch die FR 1038 140 gezählt werden.

Aufgabe der Erfindung ist es, ein völlig neues und konstruktiv einfach zu realisierendes Motorradkonzept zu schaffen, welches es ermöglicht die eingangs beschriebenen Probleme des Kettendurchhangs zu vermeiden und das ferner eine einfache und hinsichtlich des Kraftflusses optimierte Rahmenkonstruktion ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt einer ersten Ausführungsform der Erfindung gemäß Patentanspruch 1 ist ein Motorrad mit einem Rahmen, einer Hinterradschwinge, die auf einer Schwingenachse schwenkbar in Bezug auf den Rahmen angeordnet ist und einem Getriebe. Das Getriebe weist ein Getriebegehäuse und eine aus dem Getriebegehäuse herausstehende Getriebeausgangswelle auf. Auf der Getriebeausgangswelle ist ein "Getriebeausgangsritzel" angeordnet, welches über ein Zugmittel, wie z. B. über eine Kette oder einen Zahnriemen, mit einem im Hinterradbereich des Motorrads angeordneten Kettenrad gekoppelt ist.

Der Kern der Erfindung besteht darin, dass das auf der Getriebeausgangswelle angeordnete Getriebeausgangsritzel koaxial zur Schwingenachse angeordnet ist. Eine koaxiale Anordnung des Getriebeausgangsritzels, d. h. des Ritzels, welche die Kette bzw. den Riemen antreibt, und der Schwingenachse hat den Vorteil, dass für das Einfedern der Hinterradschwinge praktisch kein Durchhang des "Zugmittels", d. h. der Antriebskette bzw. des Antriebsriemens vorgehalten werden muss, wie dies bei herkömmlichen Motorrädern mit Ketten- bzw. Riemenantrieb der Fall ist. Die mit einem Kettendurchhang verbundenen Probleme werden also ursächlich vermieden.

Ausgangspunkt einer zweiten Ausführungsform ist ein Motorrad mit einem Motor mit einer Kurbelwelle, die quer zur Fahrtrichtung des Motorrads eingebaut ist, einem Getriebe und einer Kupplung, die einen geöffneten Zustand und einen geschlossenen Zustand einnehmen kann, wobei die Kupplung im geschlossenen Zustand eine Drehmomentübertragung von der Kurbelwelle auf das Getriebe ermöglicht. Der Kern der zweiten Ausführungsform der Erfindung besteht darin, dass die Kupplung koaxial zur Kurbelwelle angeordnet ist. Die Drehachse, um die die Kupplungsscheiben drehen, ist also auch quer zur Fahrtrichtung des Motorrads. Durch die koaxiale Anordnung von Kurbelwelle und Kupplung ergibt sich der Vorteil, dass die Kupplung im Unterschied zu herkömmlichen Motorrädern, bei denen die Kupplung üblicherweise auf der Getriebeeingangswelle angeordnet ist, bei höheren Drehzahlen und geringeren Drehmomenten arbeitet und somit kompakter ausgeführt sein kann. Die Kupplung kann also einen vergleichsweise kleinen Durchmesser haben, was wiederum den Vorteil hat, dass sie sich nicht bis in den Bereich der Getriebeausgangswelle erstreckt. Weshalb dies so vorteilhaft ist, wird später noch näher erläutert.

Nach einer Weiterbildung der Erfindung ist vorgesehen, dass sich die Schwingenachse, d. h. die Schwenkachse, um welche die Hinterradschwinge schwenkt, durch das Getriebe- Motorgehäuse hindurch erstreckt. Wenn im Folgenden von "Getriebegehäuse" die Rede ist, so ist dieser Begriff breit auszulegen. Unter dem Begriff "Getriebegehäuse" ist in der folgenden Beschreibung und in den Patentansprüchen ganz allgemein das Gehäuse des Getriebes und/oder des Motors zu verstehen. Die sich durch das Getriebegehäuse hindurch erstreckende Schwingenachse steht auf einander gegenüberliegenden Seiten des Getriebegehäuses aus dem Getriebegehäuse heraus. Enden der Schwingenachse können dann schwenkbar im Rahmen des Motorrads gelagert sein. Die Schwingenachse kann durch Wälzlager oder durch Gleitlager im Rahmen gelagert sein. Für die Lagerung der Schwingenachse im Rahmen können beispielsweise Kegelrollenlager verwendet werden. Die Kegelrollenlager können beispielsweise in O-Anordnung angeordnet werden.

Die Hinterradschwinge kann fest mit der Schwingenachse verbunden sein. Eine einfache Möglichkeit besteht darin, die Hinterradschwinge mittels einer Klemmverbindung auf der Schwingenachse festzuklemmen.

Die Getriebeausgangswelle, auf der das Getriebeausgangsritzel angeordnet ist, ist im Getriebegehäuse vorzugsweise durch Wälzlager gelagert.

Nach einer Weiterbildung der Erfindung ist vorgesehen, dass die Getriebeausgangswelle als Hohlwelle ausgebildet ist. Dies hat den Vorteil, dass die Schwingenachse ganz einfach durch die Getriebeausgangswelle hindurch gesteckt sein kann, was eine sehr einfache Montage und Demontage der Hinterradschwinge ermöglicht.

Das oben beschriebene Grundprinzip der Erfindung ermöglicht die Realisierung einer ganzen Reihe vorteilhafter konstruktiver Details.

Nach einer Weiterbildung der Erfindung weist das Motorrad einen Motor auf, der so eingebaut ist, dass sich die Kurbelwelle des Motors in einer Querrichtung, d. h. parallel zur Schwingenachse erstreckt. Im Unterschied zu den meisten herkömmlichen Motorrädern, bei denen die Kupplung auf der Getriebeeingangswelle angeordnet ist, ist gemäß der Erfindung vorgesehen, dass die Kupplung koaxial zur Kurbelwelle angeordnet ist und vorzugsweise auf der Kurbelwelle selbst angeordnet ist. Da an der Kurbelwelle höhere Drehzahlen und kleinere Drehmomente auftreten als an der Getriebeeingangswelle, kann die Kupplung kleiner, d. h. mit einem geringeren Durchmesser ausgeführt sein, als bei herkömmlichen Motorrädern. Bei herkömmlichen Motorrädern, bei denen die Kupplung auf der Getriebeeingangswelle angeordnet ist, überdeckt die Kupplung, in einer Seitenansicht des Motorrads gesehen, die Getriebeausgangswelle. Bei herkömmlichen Motorrädern wäre also eine koaxiale Anordnung von Schwingenachse und Getriebeausgangsritzel überhaupt nicht möglich, da die Schwingenachse die Kupplung durchsetzen würde. Demgegenüber hat eine Anordnung der Kupplung auf der Kurbelwelle den Vorteil, dass die Kupplung kompakter ausgeführt werden kann und dass sie, in einer Seitenansicht des Motorrads gesehen, die Getriebeausgangswelle nicht überdeckt und somit ein "Durchstecken" der Schwingenachse ermöglicht. Da an der Kurbelwelle geringere Drehmomente auftreten als an der Getriebeeingangswelle können eine große Vielzahl von Kupplungstypen verwendet werden, z. B. Einscheibenkupplungen, Mehrscheibenkupplungen, Trockenkupplungen, Nasskupplungen etc.

Ein "Antriebselement" der Kupplung ist vorzugsweise drehfest mit der Kurbelwelle verbunden. Ein "Abtriebselement" der Kupplung ist drehbar in Bezug zur Kurbelwelle angeordnet und mit einem auf der Kurbelwelle drehbar gelagerten Primärritzel verbunden. Bei dem Abtriebselement kann es sich um einen Kupplungskorb handeln, der einstückig mit dem Primärritzel verbunden sein kann. Das Primärritzel kann mittels eines Wälzlagers oder eines Gleitlagers auf der Kurbelwelle gelagert sein. Vorzugsweise ist das Primärritzel mittels eines Nadellagers auf der Kurbelwelle gelagert.

Es kann vorgesehen sein, dass das Drehmoment von dem auf der Kurbelwelle sitzenden Primärritzel über ein auf einer Zwischenwelle angeordnetes Zwischenrad auf die Getriebeeingangswelle übertragen wird. Das Zwischenrad oder ein anderes auf der Zwischenwelle sitzendes Zahnrad kämmt also mit einem Zahnrad der Getriebeeingangswelle, die in Richtung der Hinterradschwinge versetzt in Bezug auf die Zwischenwelle angeordnet ist. Auf der Getriebeeingangswelle und auf der Getriebeausgangswelle sind nebeneinander mehrere permanent in Eingriff befindliche schaltbare Zahnradstufen angeordnet, über die die einzelnen Gänge des Getriebes geschaltet werden können.

Das oben beschriebene Grundprinzip der Erfindung ermöglicht im Unterschied zum Stand der Technik auch eine optimale Gestaltung des Rahmens.

Nach einer Weiterbildung der Erfindung weist der Rahmen mindestens zwei linke und zwei rechte Rahmenrohre auf. Die linken Rahmenrohre sind im wesentlichen spiegelgleich zu den rechten Rahmenrohren. Die Rahmenrohre einer jeden Rahmenseite schneiden einander. "Schneiden" bedeutet in diesem Zusammenhang, dass sie zusammenlaufen und miteinander verbunden sind. Vorzugsweise ist der Rahmen so gestaltet, dass sich die Schwingenachse durch den "Schnittpunkt" der linken Rahmenrohre und durch den Schnittbund der rechten Rahmenrohre erstreckt. Der Motor und das Getriebe des Motorrads können im Bereich zwischen den linken und den rechten Rahmenrohren angeordnet sein.

Die linken und die rechten Rahmenrohre können begrifflich jeweils in ein linkes und ein rechtes unteres Rahmenrohr und ein linkes und ein rechtes oberes Rahmenrohr differenziert werden. In einer Seitenansicht des Motorrads gesehen, kann vorgesehen sein, die beiden unteren Rahmenrohre im wesentlichen gerade sind und sich von der Schwingenachse nach vorne oben in einen Bereich unterhalb eines Lenkers des Motorrads erstrecken und dort beispielsweise mit einem Lenkkopflagerrohr verbunden sind. In einer Draufsicht auf das Motorrad sind die beiden unteren Rahmenrohre nicht notwendigerweise gerade, sondern können selbstverständlich gebogen sein.

Die beiden oberen Rahmenrohre sind oberhalb der unteren Rahmenrohre angeordnet und erstrecken sich von einem Bereich unterhalb des Lenkers bzw. von einem Lenkkopflagerrohr zur Schwingenachse nach hinten unten.

Ein derart gestalteter Rahmen hat vielfältige Vorteile. So kann der Motor, das Getriebe und ein Kühler des Motorrads als vormontierte Baugruppe von unten her in den Bereich zwischen die linken und die rechten Rahmenrohre eingesetzt werden, was die Montage bzw. Demontage erheblich vereinfacht. Während sich bei herkömmlichen Motorrädern mit Kettenantrieb die Rahmenrohre vom Lenkerbereich unterhalb des Motors bzw. des Getriebes zum Schwingenlager der Hinterradschwinge erstrecken, laufen die linken und die rechten Rahmenrohre des Rahmens gemäß der Erfindung seitlich am Motor bzw. am Getriebe vorbei vom Lenkerbereich schräg nach unten zur Schwingenachse. Dies wiederum hat den Vorteil, dass in einem Bereich unterhalb der unteren Rahmenrohre und vorderhalb des Motors ein durchgehender Kühler angeordnet werden kann.

Ein Luftfilter des Motors kann sehr platzsparend und vor Spritzwasser geschützt im lenkernahen Bereich zwischen den oberen und unteren Rahmenrohren oberhalb des Motors angeordnet werden.

Eine Bordbatterie des Motorrads kann in einem schwingenachsennahen Bereich zwischen den oberen und unteren Rahmenrohren oberhalb des Getriebes angeordnet sein. In diesem Bereich befindet sich auch der Schwerpunkt des Motorrads. Eine Anordnung der relativ schweren Bordbatterie im Bereich des Schwerpunkts des Motorrads verbessert das Handling des Motorrads ganz erheblich.

Der oben beschriebene Rahmen hat auch wesentliche Vorteile hinsichtlich der Anordnung des Federbeins. Das Federbein ist zwischen dem Rahmen und der Hinterachsschwinge angeordnet und hat die Aufgabe, während der Fahrt auftretende Bewegungen des Federbeins zu federn und zu dämpfen. Ein unteres Ende des Federbeins ist gelenkig mit der Schwinge verbunden. Ein oberes Ende des Federbeins ist gelenkig mit dem Rahmen verbunden. Das Federbein erstreckt sich von hinten unten nach schräg vorne oben. Bei der oben beschriebenen Rahmenkonstruktion ist es von Vorteil, das Federbein so anzuordnen, dass es, in einer Seitenansicht des Motorrads gesehen, in einer im wesentlichen geraden Verlängerung zu den vorderen Abschnitten der oberen beiden Rahmenrohren steht. Bei einer derartigen Anordnung werden die vom Federbein auf dem Rahmen ausgeübten Kräfte im wesentlichen in Längsrichtung der vorderen Abschnitte der oberen Rahmenrohre in den Rahmen eingeleitet. Die oberen Rahmenrohre fungieren also als "Druckstäbe" und werden beim Einfedern der Hinterradschwinge primär auf Druck und nur wenig auf Biegung beansprucht. Im Unterschied zu herkömmlichen Motorrädern ermöglicht der Rahmen also einen wesentlich flacheren Einbau der Federbeinstütze, was beim Einfedern des Federbeins eine hohe Progression ermöglicht.

Auch der Kraftstofftank kann bei dem oben beschriebenen Motorradkonzept in einer günstigeren, schwerpunktnäheren Position angeordnet werden als dies bei den meisten herkömmlichen Motorrädern der Fall ist. Nach einer Weiterbildung der Erfindung ist der Kraftstofftank in einem Bereich oberhalb des Federbeins und unterhalb der Sitzbank des Motorrads angeordnet. Der Tankdeckel des Kraftstofftanks kann an der Oberseite des Kraftstofftanks unterhalb der Sitzbank angeordnet sein. Zum Betanken braucht also lediglich die Sitzbank abgenommen werden. Im Vergleich zu herkömmlichen Motorrädern, bei denen der Kraftstofftank vorderhalb der Sitzbank angeordnet ist, hat eine Anordnung im Bereich oberhalb des Federbeins den Vorteil, dass sich dadurch der Schwenkpunkt des Fahrzeugs absenken lässt, was das Handling weiter verbessert.

Alternativ dazu kann in der Sitzbank auch eine Zugangsöffnung bzw. ein "Loch" vorgesehen sein, über die bzw. über das der Tankstutzen des Kraftstofftanks zugänglich ist. Eine Betankung ist dann auch ohne ein Abnehmen der Sitzbank möglich.

Im folgenden wird die Erfindung im Zusammenhang mit der Zeichnung näher erläutert. Es zeigen:
- Figur 1: eine Seitenansicht eines Motorrads gemäß der Erfindung;
- Figur 2: die Kurbelwelle und die Kupplung eines Motorrads gemäß der Erfindung;
- Figur 3: eine Seitenansicht des Motors und des Getriebes eines Motor-rads gemäß der Erfindung;
- Figur 4: einen Schnitt entlang der in Figur 3 gezeigten Schnittlinie A-A;
- Figur 5: einen Querschnitt durch die Schwingenachse, die Getriebeabtriebswelle und die Hinterachsschwinge des Motorrads;
- Figur 6: eine perspektivische Ansicht eines schematisiert dargestellten Motorrads gemäß der Erfindung;
- Figur 7: eine Seitenansicht eines schematisiert dargestellten Motorrads gemäß der Erfindung;
- Figur 8: eine Draufsicht auf ein Motorrad gemäß der Erfindung; und
- Figur 9: die Hinterradschwinge und das daran gelagerte Hinterrad eines Motorrads gemäß der Erfindung.

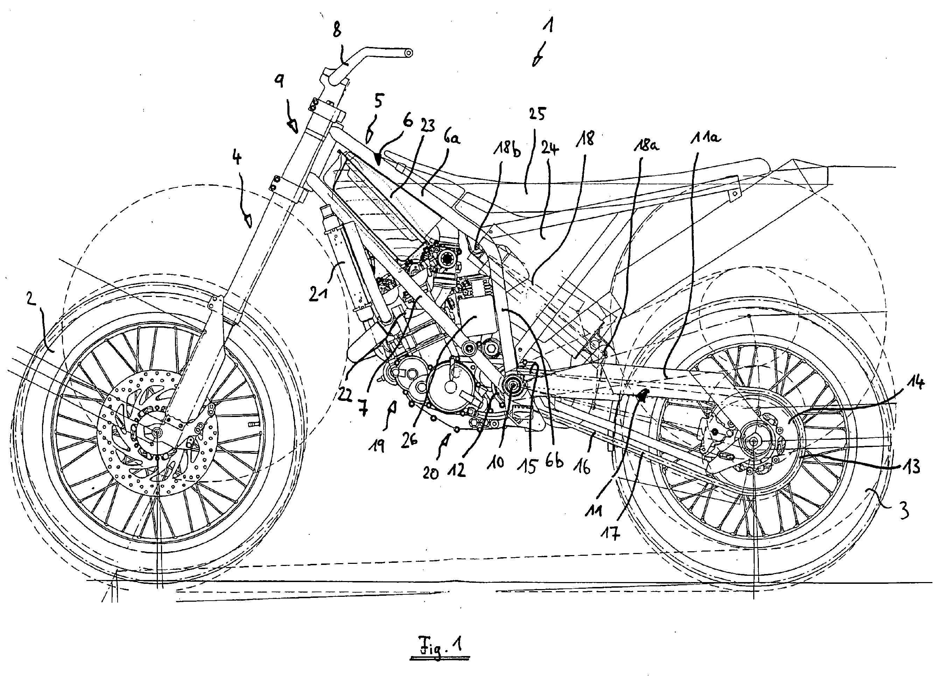

Figur 1 zeigt ein Motorrad 1 mit einem Vorderrad 2 und einem Hinterrad 3. Das Vorderrad 2 ist über eine Teleskopgabel 4 mit einem Rahmen 5 des Motorrads 1 verbunden. In der in Figur 1 dargestellten Seitenansicht sind von dem Rahmen 5 ein oberes linkes Rahmenrohr 6 und ein unteres linkes Rahmenrohr 7 zu erkennen. Das obere linke Rahmenrohr 6 kann in einen vorderen Abschnitt 6a und einen hinteren Abschnitt 6b unterteilt werden. Im Übergangsbereich zwischen den Rahmenrohrabschnitten 6a, 6b ist das obere linke Rahmenrohr 6 gebogen. Der vordere Abschnitt 6a ist in der in Figur 1 gezeigten Seitenansicht im wesentlichen gerade. Das untere linkere Rahmenrohr 7 ist in der in Figur 1 gezeigten Seitenansicht ebenfalls im wesentlichen gerade. Die beiden Rahmenrohre 6, 7 erstrecken sich von einem Bereich unterhalb eines Lenkers 8 von einem Lenkkopflager 9 schräg nach hinten unten. Der Abschnitt 6b des oberen linken Rahmenrohrs 6 "schneidet" das untere linke Rahmenrohr 7.

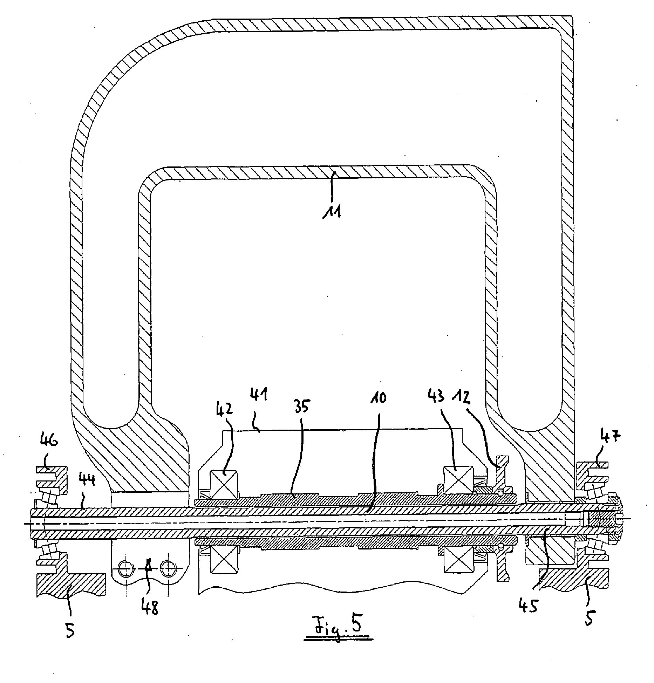

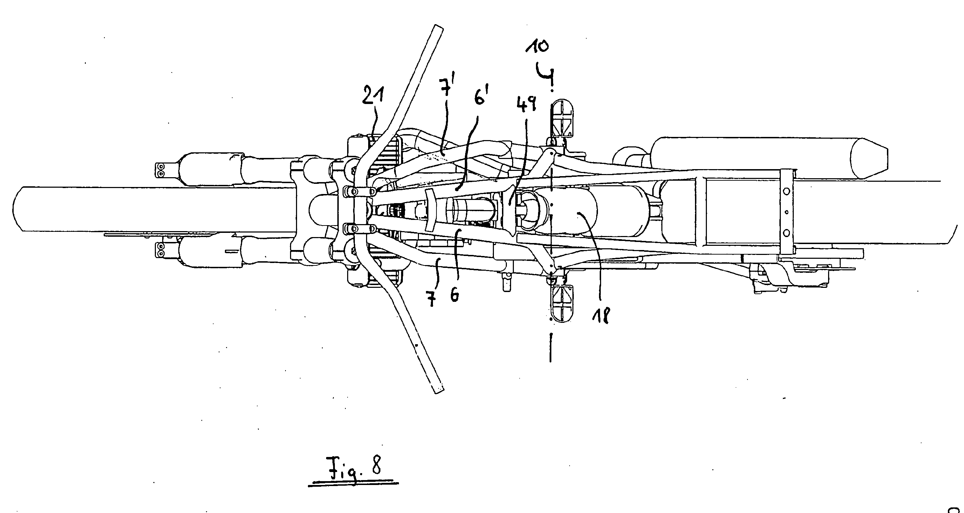

Wie am besten aus Figur 8 ersichtlich ist, ist der Rahmen 5 bezüglich einer Mittellängsachse des Motorrads im wesentlichen symmetrisch aufgebaut. Der Rahmen weist also ein dem oberen linken Rahmenrohr 6 entsprechendes oberes rechtes Rahmenrohr 6' und einem dem unteren linken Rahmenrohr 7 entsprechendes unteres rechtes Rahmenrohr 7' auf. Durch die "Schnittpunkte" der Rahmenrohre 6, 7 bzw. 6', 7' erstreckt sich eine Schwingenachse 10, die in Figur 8 gestrichelt dargestellt ist. Die Schwingenachse 10 ist am besten aus Figur 5 ersichtlich. An der Schwingenachse 10 ist die Hinterradschwinge 11 (vgl. Figur 5) befestigt. Die Hinterradschwinge 11 ist also über die Schwingenachse 10 schwenkbar in Bezug auf den Rahmen 5 angeordnet. Wie ebenfalls am besten aus Figur 5 ersichtlich ist, ist koaxial zur Schwingenachse 10 ein Getriebeausgangsritzel 12 angeordnet, welches eine Kette 13 des Motorrads antreibt. Das Getriebeausgangsritzel 12 ist über die Kette 13 mit einem Kettenrad 14 gekoppelt, welches das Hinterrad 3 antreibt.

Wie aus Figur 1 ersichtlich ist, ist der Oberzug 11a der Hinterradschwinge hohl. Ein Zugtrum 15 der Kette 13 erstreckt sich durch den Oberzug 11a der Hinterradschwinge 11. Das Obertrum 11a dient also zugleich als Kettenschutz. Ein Untertrum 16 der Kette 13 läuft durch einen Schlauchmantel 17 und ist somit ebenfalls geschützt.

Es sei ausdrücklich darauf hingewiesen, dass die Kette nicht notwendigerweise den Oberzug der Hinterradschwinge hindurchgeführt sein muss, sondern auch "außerhalb" angeordnet sein kann.

Zwischen dem Rahmen 5 und der Hinterradschwinge 11 ist ein Federbein 18 angeordnet. Wie aus Figur 1 ersichtlich ist, ist das Federbein 18 im Vergleich zu herkömmlichen Motorrädern relativ flach angeordnet. Ein hinteres unteres Ende 18a des Federbeins 18 ist gelenkig mit der Hinterradschwinge 11 verbunden. Ein vorderes oberes Ende 18b des Federbeins 18 ist gelenkig mit einem hier nicht näher dargestellten Querrohr des Rahmens 5 verbunden. Wie aus Figur 1 ersichtlich ist, steht das Federbein 18 in der hier dargestellten Seitenansicht des Motorrads im wesentlichen in einer geraden Verlängerung zu den oberen Rahmenrohr 6. Dadurch ergibt sich eine sehr günstige Krafteinleitung in den Rahmen 5. Die oberen Rahmenrohre 6, 6' (vgl. Figur 8) werden dabei also primär auf Druck beansprucht. Aufgrund der relativ "flachen" Anordnung des Federbeins 18 ergibt sich beim Einfedern das Hinterrads 3 auch eine relativ hohe Federprogression, was sich ebenfalls günstig auf das Fahrverhalten des Motorrads 1 auswirkt. Die Federprogression ist wesentlich höher als bei herkömmlichen Motorrädern, bei denen das Federbein steiler eingebaut ist.

Wie aus Figur 1 ersichtlich ist, ist der Rahmen 5 des Motorrads 1 nach unten im wesentlichen offen. Dies hat den Vorteil, dass der Motor 19, das Getriebe 20 und ein Kühler 21 als "vormontierte Powerunit" bei der Montage des Motorrads 1 in einfacher Weise von unten in den Rahmen 5 eingesetzt werden können, was den Montagaufwand im Vergleich zu herkömmlichen Motorrädern, bei denen sich unterhalb des Motors bzw. des Getriebes Rahmenrohre erstrecken, wesentlich vereinfacht.

Die oben beschriebene Rahmenkonzeption in Verbindung mit der koaxialen Anordnung der Schwingenachse 10 und des Getriebeausgangsritzels 12 ermöglicht eine Einbauposition des Motors 19 und des Getriebes 20, bei der der Motor 19 im Vergleich zu herkömmlichen Motorrädern ein Stück weiter hinten angeordnet ist und der Zylinder des in Figur 1 dargestellten Einzylindermotors sich vergleichsweise flach nach vorne oben erstreckt.

Im Bereich unterhalb des Lenkers 8, hinter dem Lenkkopflager 9 und zwischen den oberen Rahmenrohren 6, 6' und den unteren Rahmenrohren 7, 7' ist eine sogenannte "Airbox" angeordnet, welche einen Luftfilter beinhaltet, über den der Motor 19 mit Ansaugluft versorgt wird. Da die Airbox relativ leicht ist und somit das Handling des Motorrads nur wenig beieinträchtigt, ist sie relativ weit oben am Motorrad 1 angeordnet, etwa dort, wo sich bei herkömmlichen Motorrädern der Tank befindet.

Aufgrund der relativ flachen Position des Federbeins 18 kann der Kraftstofftank in einer günstigen, schwerpunktnäheren Position angeordnet werden, als dies bei den meisten herkömmlichen Motorrädern der Fall ist. Der Kraftstofftank 24 befindet sich in einer Position oberhalb des Federbeins 18 und unterhalb einer Sitzbank 25 des Motorrads 1. Der Kraftstofftank 24 ist also relativ nahe des Schwerpunkts des Motorrads, der in etwa im Bereich des Federbeins 18 liegt, angeordnet. Durch die schwerpunktnahe Anordnung des Kraftstofftanks 24 verbessert sich das Handling des Motorrads 1.

Eine weitere relativ schwere Fahrzeugkomponenten ist die Bordbatterie 26. Die Bordbatterie 26 ist in einem Bereich schräg oberhalb bzw. vorderhalb der Schwingenachse 10 zwischen den oberen Rahmenrohren 6, 6' und den unteren Rahmenrohren 7, 7' und somit ebenfalls in der Nähe des Schwerpunkts des Motorrads angeordnet, was das Handling weiter verbessert.

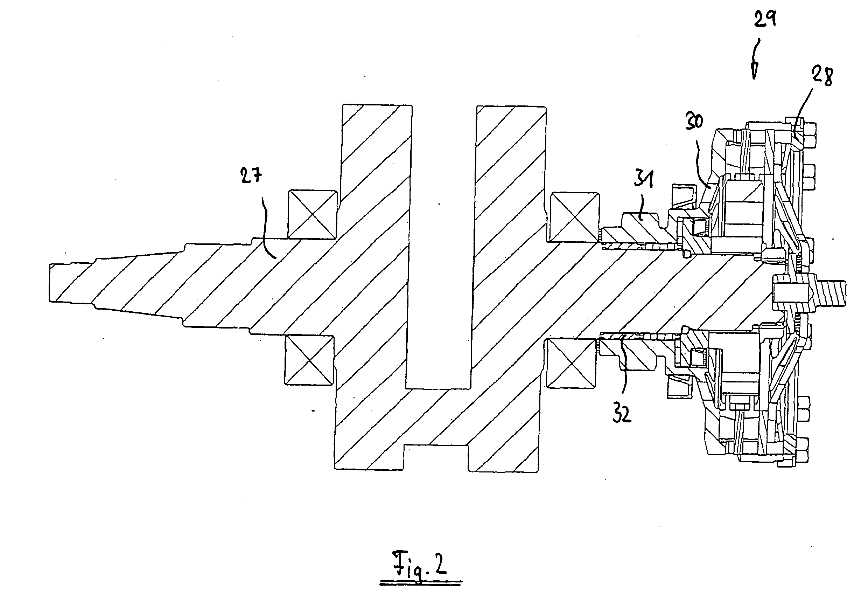

Der Motor 19 des Motorrads 1 ist so eingebaut, dass sich die Kurbelwelle 27 (vgl. Figur 2) in Querrichtung des Motorrads, d. h. senkrecht zur Zeichenebene der Figur 1 und parallel zur Schwingenachse 10 erstreckt. Der Begriff "Querrichtung" kann auch so interpretiert werden, dass die Kurbelwelle quer zur Hauptfahrrichtung und somit quer zur Längsrichtung des Motorrads ist. Die Kurbelwelle 27 ist am besten aus Figur 2 ersichtlich. In Figur 2 ist die Kurbelwelle eines Einzylindermotors dargestellt. Die Erfindung ist selbstverständlich auch für quer eingebaute Mehrzylindermotoren geeignet. Der Kolben (nicht dargestellt) des Motors überträgt eine Kolbenkraft und bewirkt dadurch eine Drehung der Kurbelwelle 27. Vom rechten Ende der in Figur 2 gezeigten Kurbelwelle 27 wird das Drehmoment auf ein Antriebselement 28 einer Mehrscheibenkupplung 29 übertragen.

Im Unterschied zu herkömmlichen Motorrädern, bei denen die Kupplung üblicherweise auf der Getriebeeingangswelle angeordnet ist, ist die Kupplung 29 auf der Kurbelwelle 27 angeordnet. Wenn die Kupplung 29 geschlossen ist, wird das Drehmoment von dem Antriebselement 28 auf einen als "Abtriebselement" fungierenden Kupplungskorb 30 übertragen, der hier einstückig mit einem Primärritzel 31 verbunden ist. Der Kupplungskorb muss natürlich nicht notwendigerweise einstückig mit dem Primärritzel verbunden sein. Denkbar ist an dieser Stelle auch eine Nietverbindung. Der Kupplungskorb 30 bzw. das Primärritzel 31 ist über ein Nadellager 32 auf der Kurbelwelle 27 gelagert.

Im Vergleich zu herkömmlichen Motorrädern, bei denen die Kupplung auf der Getriebeeingangswelle gelagert angeordnet ist, hat eine Anordnung auf der Kurbelwelle den Vorteil, dass dort geringere Drehmomente zu übertragen sind, was eine kompaktere Bauweise der Kupplung ermöglicht.

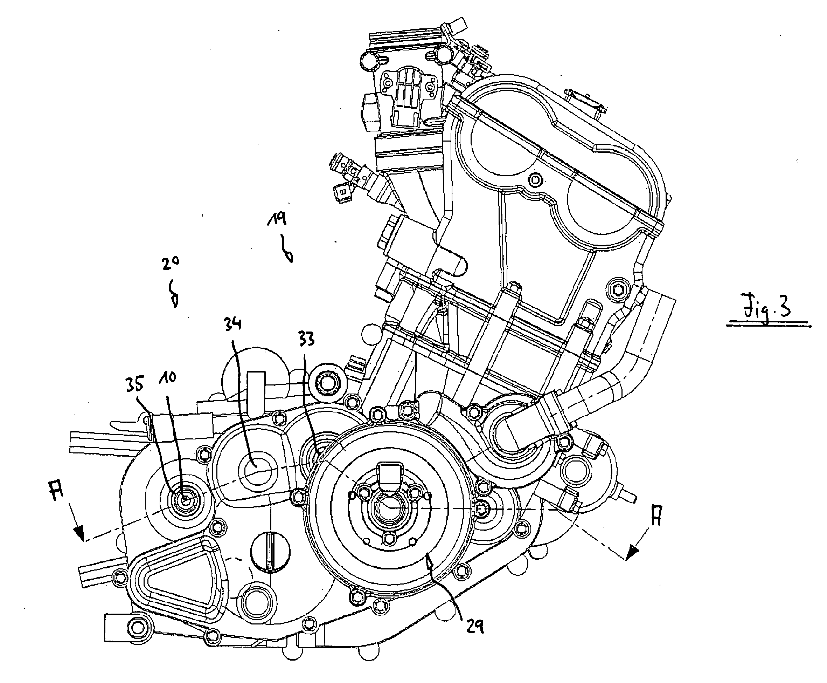

Figur 3 zeigt eine Seitenansicht der Motor-/Getriebeeinheit und zwar von der der in Figur 1 gezeigten Seite gegenüberliegenden Seite, d. h. von der "rechten" Seite des Motorrads 1 aus gesehen. Zu erkennen ist die Lage der Kupplung 29, einer Zwischenwelle 33, einer Getriebeeingangswelle 34 und der koaxial zur Schwingenachse 10 angeordneten Getriebeausgangswelle 35. Ferner ist eine Schnittlinie A-A dargestellt.

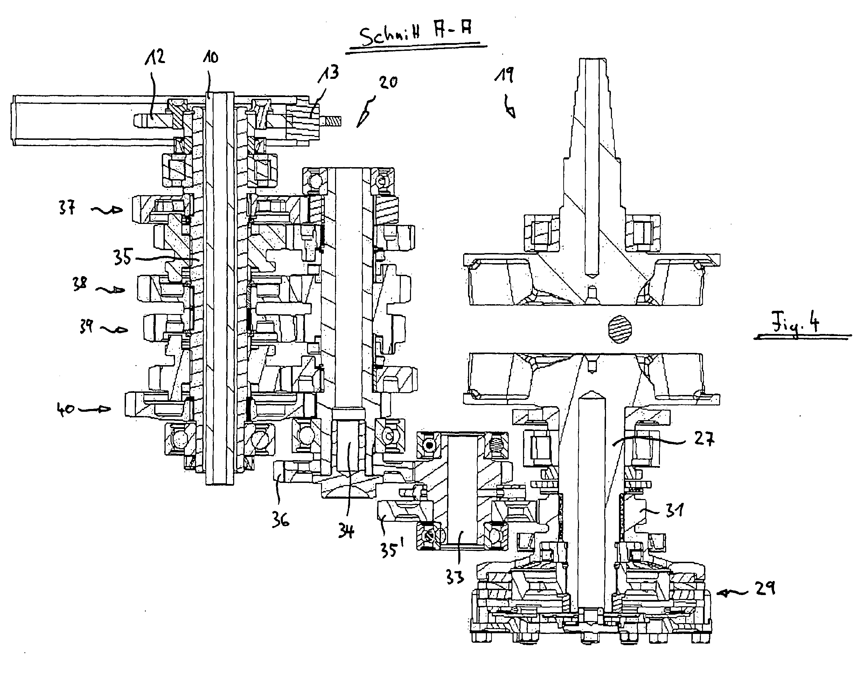

Figur 4 zeigt einen Schnitt durch die Motor-/Getriebeeinheit entlang der Schnittlinie A-A. Wie aus Figur 4 ersichtlich ist, wird das von der Kurbelwelle 27 gelieferte Drehmoment über die Kupplung 29 auf das Primärritzel 31 übertragen und von dem Primärritzel 31 auf ein Zwischenzahnrad 35', das auf der Zwischenwelle 33 angeordnet ist. Das Zwischenzahnrad 35' kämmt mit einem Getriebeeingangsritzel 36, das auf der Getriebeeingangswelle 34 angeordnet ist. Auf der Getriebeeingangswelle 34 und auf der Getriebeausgangswelle 35 sind mehrere schaltbare Zahnradstufen 37 - 40 angeordnet, über die einzelne Gänge des Getriebes 20 geschaltet werden können. In Abhängigkeit von dem eingelegten Gang wird das Drehmoment über eine dieser Zahnradstufen 37 - 40 auf die Getriebeausgangswelle 35 und von dort über das Getriebeausgangsritzel 12 auf die mit dem Hinterrad 3 gekoppelte Kette 13 übertragen.

Wie am besten aus den Figuren 4 bzw. 5 ersichtlich ist, ist die Getriebeausgangswelle 35 eine Hohlwelle. Die Schwingenachse 10 ist durch die Getriebeausgangswelle hindurch gesteckt. Auf einer Seite des Getriebegehäuses 41 erstreckt die Getriebeausgangswelle 35 aus dem Getriebegehäuse 41 heraus. Auf dem herausstehenden Abschnitt der Getriebeausgangswelle 35 ist das Getriebeausgangsritzel 12 angeordnet. Die Getriebeausgangswelle 35 ist mittels zweier Wälzlager 42, 43 im Getriebegehäuse 41 gelagert.

Wie am besten aus Figur 5 ersichtlich ist, erstreckt sich die Schwingenachse 10 durch die Getriebeausgangswelle 35 hindurch und somit auch durch das Getriebegehäuse 41. Enden 44, 45 der Schwingenachse 10 stehen aus dem Getriebegehäuse 41 heraus und sind mittels zweier Kegelrollenlager 46, 47, die hier in O-Anordnung eingebaut sind, im Rahmen 5 des Motorrads 1 gelagert. Bei der Schwingenachse 10 handelt es sich also um eine "Steckachse" die eine einfache Montage und Demontage der Hinterradschwinge 11 ermöglicht.

Die Hinterradschwinge 11 ist mittels einer Klemmverbindung 48 auf der Schwingenachse 10 festgeklemmt und somit fest im Bezug auf die Schwingenachse 10 positioniert. Da die Schwingenachse 10 über die Kegelrollenlager 46, 47 im Rahmen 5 gelagert ist, kann die Hinterradschwinge 11 in Bezug auf den Rahmen 5 um die Schwingenachse 10 verschwenkt werden.

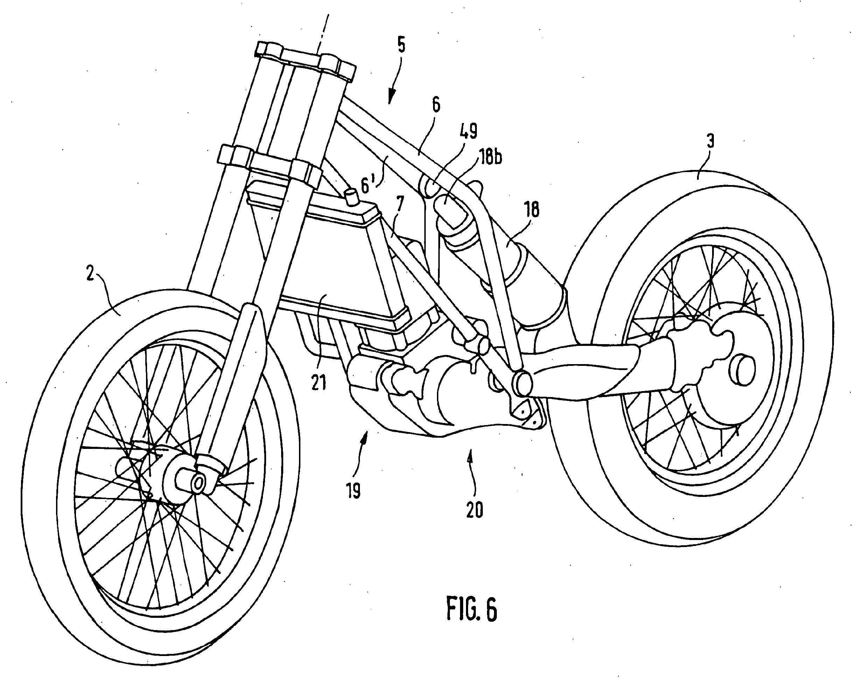

Figur 6 zeigt eine stark schematisierte Darstellung eines Motorrads 1 gemäß der Erfindung in perspektivischer Darstellung. In dieser Darstellung ist besonders gut der flache Einbau des Federbeins 18 zu erkennen. Das vordere Ende 18b des Federbeins 18 ist über eine die beiden oberen Rahmenrohre 6, 6' miteinander verbindenden Querstrebe 49 gelenkig mit dem Rahmen 5 verbunden. Wie bereits erwähnt ergibt sich durch die flache Anordnung des Federbeins 18 eine starke Federbeinprogression, was das Fahrverhalten des Motorrads im Vergleich zu herkömmlichen Motorrädern, bei denen das Federbein steiler eingebaut ist, erheblich verbessert.

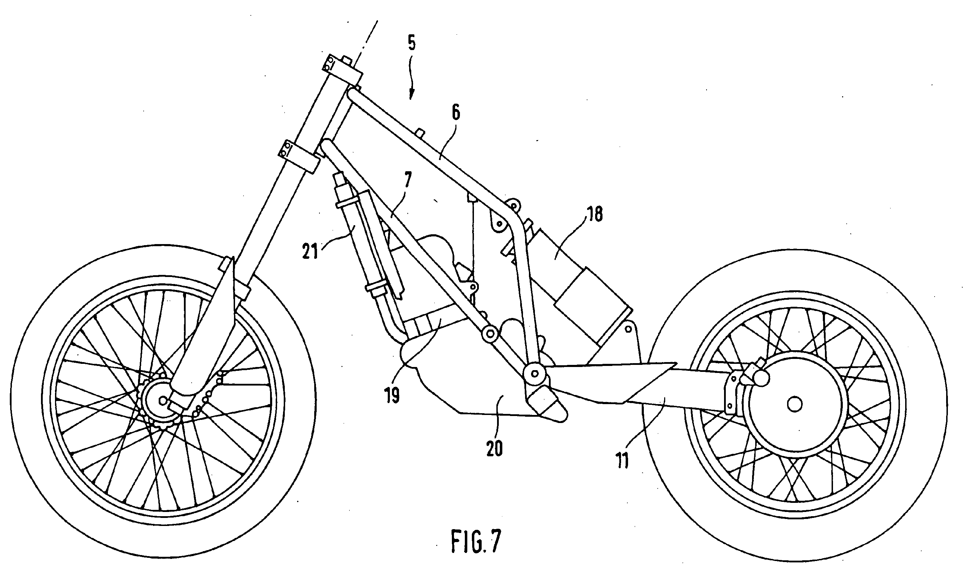

Figur 7 zeigt das Motorrad der Figur 6 in Seitenansicht. Auch hier ist nochmals sehr gut die flache Einbaulage des Federbeins 18 und die sehr einfache Bauweise des Rahmens 5 zu erkennen. Aus den Figuren 6, 7 ist auch sehr gut zu erkennen, dass der Motor 19, das Getriebe 20 und der Kühler 21 als vormontierte "Powerunit" bei der Montage des Motorrads 1 von unten her in den Rahmen 5 eingesetzt werden können, da sich im Unterschied zu herkömmlichen Motorrädern unterhalb des Motors 19 bzw. des Getriebes 20 keinerlei Rahmenrohre "nach hinten" zur Anlenkstelle der Hinterradschwinge erstrecken.

Wie aus den Figuren 6 und 8 ersichtlich ist, ermöglicht diese Rahmenkonzeption auch die Anordnung eines durchgehenden Kühlers 21 unterhalb der unteren Rahmenrohre 7, 7'.

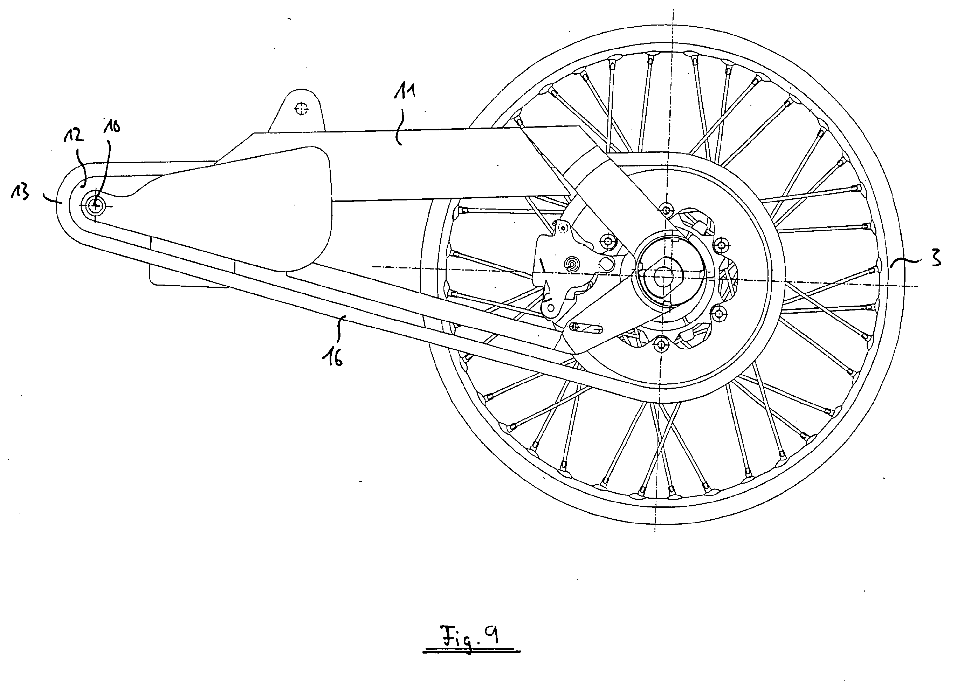

Figur 9 zeigt eine Seitenansicht der Hinterradschwinge 11 des Hinterrads 3 in vergrößerter Darstellung.

## Patentansprüche

1. Motorrad (1) mit
• einem Rahmen (5),
• einer Hinterradschwinge (11), die auf einer Schwingenachse (10) schwenkbar in Bezug auf den Rahmen (5) angeordnet ist,
• einem Getriebe (20), das ein Getriebegehäuse (41) und eine aus dem Getriebegehäuse (41) herausstehende Getriebeausgangswelle (35) aufweist, auf der ein Getriebeausgangsritzel (12) angeordnet ist, welches über ein Zugmittel (13) mit einem im Hinterradbereich des Motorrads (1) angeordneten gezahnten Rad, insbesondere einem Kettenrad (14), gekoppelt ist, wobei
das Getriebeausgangsritzel (12) koaxial zur Schwingenachse (10) angeordnet ist,
**dadurch gekennzeichnet, dass**
die Schwingenachse (10) im Rahmen (5) gelagert ist.

2. Motorrad (1) nach Anspruch 1, **dadurch gekennzeichnet, dass** sich die Schwingenachse (10) durch das Getriebegehäuse (41) hindurch erstreckt und auf gegenüberliegenden Seiten des Getriebegehäuses (41) aus dem Getriebegehäuse (41) heraussteht.

3. Motorrad (1) nach einem der Ansprüche 1 oder 2, **dadurch gekennzeichnet, dass** die Getriebeausgangswelle (35) im Getriebegehäuse (41) durch Wälzlager (42, 43) gelagert ist.

4. Motorrad (1) nach einem der vorangehenden Ansprüche, **dadurch gekennzeichnet, dass** die Getriebeausgangswelle (35) eine Hohlwelle ist.

5. Motorrad (1) nach einem der vorangehenden Ansprüche, **dadurch gekennzeichnet, dass** die Schwingenachse (10) sich durch die Getriebeausgangswelle (35) hindurch erstreckt.

6. Motorrad (1) nach einem der vorangehenden Ansprüche, **dadurch gekennzeichnet, dass** Enden (44, 45) der Schwingenachse (10) schwenkbar im Rahmen (5) gelagert sind.

7. Motorrad (1) nach Anspruch 6, **dadurch gekennzeichnet, dass** die Enden (44, 45) der Schwingenachse (10) durch Wälzlager (46, 47) im Rahmen (5) gelagert sind.

8. Motorrad (1) nach Anspruch 7, **dadurch gekennzeichnet, dass** die Wälzlager (46, 47) Kegelrollenlager sind.

9. Motorrad (1) nach Anspruch 8, **dadurch gekennzeichnet, dass** die Kegelrollenlager (46, 47) in O-Anordnung angeordnet sind.

10. Motorrad (1) nach einem der vorangehenden Ansprüche, **dadurch gekennzeichnet, dass** die Hinterradschwinge (11) mittels einer Klemmverbindung (48) an der Schwingenachse (10) fixiert ist.

11. Motorrad (1) nach einem der vorangehenden Ansprüche, **dadurch gekennzeichnet, dass** das Motorrad (1) einen Motor (19) mit einer sich in einer Querrichtung des Motorrads (1) erstreckenden Kurbelwelle (27) aufweist.

12. Motorrad (1) nach Anspruch 11, **dadurch gekennzeichnet, dass** eine Kupplung (29) vorgesehen ist, die koaxial zur Kurbelwelle (27) angeordnet ist.

13. Motorrad (1) nach Anspruch 12, **dadurch gekennzeichnet, dass** die Kupplung (29) auf der Kurbelwelle (27) angeordnet ist.

14. Motorrad (1) nach einem der Ansprüche 11 bis 13, **dadurch gekennzeichnet, dass** ein Antriebselement (28) der Kupplung (29) drehfest mit der Kurbelwelle (27) verbunden ist und ein Abtriebselement (30) der Kupplung (29) drehbar in Bezug auf die Kurbelwelle (27) angeordnet ist, wobei das Abtriebselement (30) der Kupplung (29) mit einem auf der Kurbelwelle (27) drehbar gelagerten Primärritzel (31) verbunden ist.

15. Motorrad (1) nach Anspruch 14, **dadurch gekennzeichnet, dass** das Abtriebselement (30) der Kupplung (29) ein Kupplungskorb ist, der einstückig mit dem Primärritzel (31) verbunden ist.

16. Motorrad (1) nach einem der Ansprüche 14 oder 15, **dadurch gekennzeichnet, dass** das Primärritzel (31) mittels eines Wälzlagers (32) auf der Kurbelwelle (27) gelagert ist.

17. Motorrad (1) nach einem der Ansprüche 14 bis 16, **dadurch gekennzeichnet, dass** das Primärritzel (31) mit einem Zwischenrad (35') kämmt, das auf einer versetzt zur Kurbelwelle (27) angeordneten Zwischenwelle (33) angeordnet ist.

18. Motorrad (1) nach Anspruch 17, **dadurch gekennzeichnet, dass** sich, in einer Seitenansicht des Motorrads (1) gesehen, ein Außenumfang der Kupplung (29) bis in den Bereich der Zwischenwelle (33), nicht aber bis in den Bereich der Getriebeausgangswelle (35) erstreckt.

19. Motorrad (1) nach einem der Ansprüche 17 oder 18, **dadurch gekennzeichnet, dass** das Zwischenrad (35') mit einem Zahnrad (36) einer Getriebeeingangswelle (34) drehgekoppelt ist, die in Richtung der Hinterradschwinge (11) versetzt in Bezug auf die Zwischenwelle (33) angeordnet ist.

20. Motorrad (1) nach einem der vorangehenden Ansprüche, **dadurch gekennzeichnet, dass** auf der Getriebeeingangswelle (34) und auf der Getriebeausgangswelle (35) mehrere miteinander in Eingriff befindliche schaltbare Zahnradstufen (37 - 40) angeordnet sind.

21. Motorrad (1) nach einem der vorangehenden Ansprüche, **dadurch gekennzeichnet, dass** der Rahmen mindestens zwei sich schneidende linke Rahmenrohre (6, 7) und mindestens zwei sich schneidende rechte Rahmenrohre (6', 7') aufweist und dass die Schwingenachse (10) sich durch den Schnittpunkt der linken Rahmenrohre (6, 7) und durch den Schnittpunkt der rechten Rahmenrohre (6', 7') erstreckt.

22. Motorrad (1) nach Anspruch 21, **dadurch gekennzeichnet, dass** ein Motor (19) vorgesehen ist und der Motor (19) und das Getriebe (20) im Bereich zwischen den linken und rechten Rahmenrohren (6, 7, 6', 7') angeordnet ist.

23. Motorrad (1) nach einem der vorangehenden Ansprüche, **dadurch gekennzeichnet, dass** der Rahmen (5) ein linkes und ein rechtes unteres Rahmenrohr (7, 7') aufweist, die in einer Seitenansicht des Motorrads (1) gesehen, im wesentlichen gerade sind und die sich von der Schwingenachse (10) nach vorne oben in einen Bereich unterhalb eines Lenkers (8) des Motorrads (1) erstrecken.

24. Motorrad (1) nach Anspruch 23, **dadurch gekennzeichnet, dass** der Rahmen (5) ein linkes und ein rechtes oberes Rahmenrohr (6, 6') aufweist, die oberhalb der unteren Rahmenrohre (7, 7') angeordnet sind und die sich ebenfalls von einem Bereich unterhalb des Lenkers (8) zur Schwingenachse (10) nach hinten unten erstrecken.

25. Motorrad (1) nach Anspruch 24, **dadurch gekennzeichnet, dass** die oberen Rahmenrohre (6, 6') gebogen sind.

26. Motorrad (1) nach einem der vorangehenden Ansprüche, **dadurch gekennzeichnet, dass** ein Kühler (21) vorgesehen ist, der in einem Bereich unterhalb der unteren Rahmenrohre (7, 7') und vorderhalb des Motors (19) angeordnet ist.

27. Motorrad (1) nach einem der Ansprüche 24 bis 26, **dadurch gekennzeichnet, dass** ein Luftfilter (23) vorgesehen ist, der in einem lenkernahen Bereich zwischen den linken und den rechten Rahmenrohren (6, 7, 6', 7') und zwischen den unteren und den oberen Rahmenrohren (6, 6'; 7, 7') angeordnet ist.

28. Motorrad (1) nach einem der Ansprüche 24 bis 27, **dadurch gekennzeichnet, dass** eine Bordbatterie (26) vorgesehen ist, die in einem schwingenachsennahen Bereich zwischen den oberen und den unteren Rahmenrohren (6, 6'; 7, 7') oberhalb des Getriebes angeordnet ist.

29. Motorrad (1) nach einem der vorangehenden Ansprüche, **dadurch gekennzeichnet, dass** zwischen der Hinterradschwinge (11) und dem Rahmen (5) ein Federbein (18) angeordnet ist, welches die Hinterradschwinge (11) gegenüber dem Rahmen (5) federt und dämpft.

30. Motorrad (1) nach Anspruch 29, **dadurch gekennzeichnet, dass**, in einer Seitenansicht des Motorrads (1) gesehen, vordere Abschnitte (6a) der oberen Rahmenrohre (6, 6') in einer im wesentlichen gerade Verlängerung zu einer Längsachse des Federbeins (18) stehen.

31. Motorrad (1) nach einem der Ansprüche 29 oder 30, **dadurch gekennzeichnet, dass** ein Kraftstofftank (24) vorgesehen ist, der in einem Bereich oberhalb des Federbeins (18) und unterhalb einer Sitzbank (25) des Motorrads (1) angeordnet ist.

32. Motorrad (1) nach Anspruch 31, **dadurch gekennzeichnet, dass** der Kraftstofftank (24) an seiner Oberseite einen Tankdeckel aufweist, der durch Abnehmen der Sitzbank (25) zugänglich ist.

## Claims

1. A motorcycle (1) comprising
• a frame (5),
• a rear-wheel suspension arm (11) mounted on a pivot (10) so as to be pivotable relative to the frame (5), and .
• a gear unit (20) comprising a gearbox (41) and a gear output shaft (35) which projects the gearbox (41) from and bears a gear output pinion (12) coupled by a tension means (13) to a toothed wheel, especially a chain wheel (14), disposed in the rear-wheel region of the motorcycle (1), wherein
• the gear output pinion (12) is coaxial with the pivot (10),
**characterised in that**
the pivot (10) is mounted in the frame (5).

2. A motorcycle (1) according to claim 1, **characterised in that** the pivot pin (10) extends through the gearbox (41) and projects from opposite sides of the gearbox (41).

3. A motorcycle (1) according to claim 1 or claim 2, **characterised in that** the gear output shaft (35) is mounted in the gearbox (41) on rolling bearings (42, 43).

4. A motorcycle (1) according to any of the preceding claims, **characterised in that** the gear output shaft (35) is hollow.

5. A motorcycle (1) according to any of the preceding claims, **characterised in that** the pivot (10) extends through the gear output shaft (35).

6. A motorcycle (1) according to any of the preceding claims, **characterised in that** ends (44, 45) of the pivot (10) are pivotably mounted in the frame (5).

7. A motorcycle (1) according to claim 6, **characterised in that** the ends (44, 45) of the pivot (10) are mounted in the frame (5) on rolling bearings (46, 47).

8. A motorcycle (1) according to claim 7, **characterised in that** the rolling bearings (46, 47) are tapered roller bearings.

9. A motorcycle (1) according to claim 8, **characterised in that** the tapered roller bearings (46, 47) are in an O arrangement.

10. A motorcycle (1) according to any of the preceding claims, **characterised in that** the rear-wheel suspension arm (11) is fixed to the pivot (10) by a clamping joint (48).

11. A motorcycle (1) according to any of the preceding claims, **characterised in that** the motorcycle (1) comprises an engine (19) with a crankshaft (27) extending in the transverse direction of the motorcycle (1).

12. A motorcycle (1) according to claim 11, **characterised in that** a clutch (29) is provided coaxial with the crankshaft (27).

13. A motorcycle (1) according to claim 12, **characterised in that** the clutch (29) is mounted on the crankshaft (27).

14. A motorcycle (1) according to any of claims 11 to 13, **characterised in that** a drive element (28) of the clutch (29) is co-rotatably connected to the crankshaft (27) and a driven element (30) of the coupling (29) is rotatably disposed relative to the crankshaft (27), wherein the driven element (30) of the clutch (29) is connected to a primary pinion (31) mounted for rotation on the crankshaft (27).

15. A motorcycle (1) according to claim 14, **characterised in that** the driven element (30) of the clutch (29) is a cage integrally connected to the primary pinion (31).

16. A motorcycle (1) according to claim 14 or claim 15, **characterised in that** the primary pinion (31) is mounted on the crankshaft (27) via a rolling bearing (32).

17. A motorcycle according to any of claims 14 to 16, **characterised in that** the primary pinion (31) meshes with an intermediate wheel (35') disposed on an intermediate shaft (33) which is offset relative to the crankshaft (27).

18. A motorcycle (1) according to claim 17, **characterised in that**, viewed from the side of the motorcycle (1), an outer periphery of the clutch (29) extends up to the region of the intermediate shaft (33) but not up to the region of the gear output shaft (35).

19. A motorcycle (1) according to claim 17 or claim 18, **characterised in that** the intermediate shaft (35') is coupled in rotation to a gearwheel (36) of a gear input shaft (34) which is offset in the direction of the rear wheel suspension arm (11) relative to the intermediate shaft (33).

20. A motorcycle (1) according to any of the preceding claims, **characterised in that** a number of switchable gearwheel stages (37 - 40) in engagement with one another are disposed on the gear input shaft (34) and on the gear output shaft (35).

21. A motorcycle (1) according to any of the preceding claims, **characterised in that** the frame has at least two intersecting left frame tubes (6, 7) and at least two intersecting right frame tubes (6', 7') and the pivot (10) extends through the point of intersection of the left frame tubes (6, 7) and through the point of intersection of the right frame tubes (6', 7').

22. A motorcycle (1) according to claim 21, **characterised in that** an engine (19) is provided and the engine (19) and gear unit (20) are disposed between the left and right frame tubes (6, 7, 6', 6').

23. A motorcycle (1) according to any of the preceding claims, **characterised in that** the frame (5) comprises a left and a right bottom frame tube (7, 7') which, viewed from the side of the motorcycle (1), are substantially straight and extend from the pivot (10) forwards and upwards into a region underneath a handlebar (8) of the motorcycle (1).

24. A motorcycle (1) according to claim 23, **characterised in that** the frame (5) has a left and a right top frame tube (6, 6') disposed above the bottom frame tubes (7, 7') and correspondingly extending from a region below the handlebar (8) backwards and downwards towards the pivot (10).

25. A motorcycle (1) according to claim 24, **characterised in that** the top frame tubes (6, 6') are bent.

26. A motorcycle (1) according to any of the preceding claims, **characterised in that** a radiator (21) is provided and disposed in a region below the bottom frame tubes (7, 7') and in front of the engine (19).

27. A motorcycle (1) according to any of claims 24 to 26, **characterised in that** an air filter (23) is provided and disposed in a region near the handlebar between the left and the right frame tubes (6, 7, 6', 7') and between the bottom and the top frame tubes (6, 6" 7, 7').

28. A motorcycle (1) according to any of claims 24, to 27, **characterised in that** an on-board battery (26) is provided and disposed in a region near the pivot between the top and the bottom frame tubes (6, 6'; 7, 7') above the gear unit.

29. A motorcycle (1) according to any of the preceding claims, **characterised in that** a spring leg (18) is disposed between the rear-wheel suspension arm (11) and the frame (5) and springs and cushions the rear-wheel suspension arm (11) relative to the frame (5).

30. A motorcycle (1) according to claim 29, **characterised in that**, viewed from the side of the motorcycle (1), front portions (6a) of the top frame tubes (6, 6') are in a substantially straight extension of a longitudinal axis of the spring leg (1 8).

31. A motorcycle (1) according to claim 29 or claim 30, **characterised in that** a fuel tank (24) is provided in a region above the spring leg (18) and below a seat (25) on the motorcycle (1).

32. A motorcycle (1) according to claim 31, **characterised in that** the tank (24) has a cover on top, accessible by removing the seat (25).

## Revendications

1. Motocyclette (1) comprenant :
- un cadre (5),
- un bras oscillant de roue arrière (11) disposé pivotant sur un axe d'oscillation (10) par rapport au cadre (5),
- une boîte de vitesses (20) avec un carter de boîte de vitesses (41) et un arbre de sortie de boîte de vitesses (35) venant en saillie du carter (41) et recevant un pignon de sortie de boîte de vitesses (12) couplé par un moyen de traction (13) à une roue dentée disposée dans la zone de roue arrière de la motocyclette (1), en particulier une roue dentée pour chaîne (14), le pignon de sortie de boîte de vitesses (12) étant coaxial à l'axe d'oscillation (10),
**caractérisée en ce que**
l'axe d'oscillation (10) est installé dans le cadre (5).

2. Motocyclette (1) selon la revendication 1,
**caractérisée en ce que**
l'axe d'oscillation (10) traverse le carter de boîte de vitesses (41) et vient en saillie des côtés opposés du carter de boîte de vitesses (41), à travers le carter de boîte de vitesses (41).

3. Motocyclette (1) selon l'une des revendications 1 ou 2,
**caractérisée en ce que**
l'arbre de sortie de boîte de vitesses (35) est monté dans le carter de boîte de vitesses (41) par des paliers à roulement (42, 43).

4. Motocyclette (1) selon l'une des revendications précédentes,
**caractérisée en ce que**
l'arbre de sortie de la boîte de vitesses (35) est un arbre creux.

5. Motocyclette (1) selon l'une des revendications précédentes,
**caractérisée en ce que**
l'axe d'oscillation (10) traverse l'arbre de sortie de boîte de vitesses (35).

6. Motocyclette (1) selon l'une des revendications précédentes,
**caractérisée en ce que**
les extrémités (44, 45) de l'axe d'oscillation (10) sont montées pivotantes dans le cadre (5).

7. Motocyclette (1) selon la revendication 6,
**caractérisée en ce que**
les extrémités (44, 45) de l'axe d'oscillation (10) sont montées dans le cadre (5) à l'aide de paliers à roulement (46, 47).

8. Motocyclette (1) selon la revendication 7,
**caractérisée en ce que**
les paliers à roulement (46, 47) sont des roulements à galets coniques.

9. Motocyclette (1) selon la revendication 8,
**caractérisée en ce que**
les paliers à roulement coniques (46, 47) sont disposés dans un montage torique.

10. Motocyclette (1) selon l'une des revendications précédentes,
**caractérisée en ce que**
le bras oscillant de roue arrière (11) est fixé à l'axe oscillant (10) à l'aide d'une liaison de serrage.

11. Motocyclette (1) selon l'une des revendications précédentes,
**caractérisée en ce que**
la motocyclette (1) a un moteur (19) dont le vilebrequin (27) s'étendant dans la direction transversale de la motocyclette (1).

12. Motocyclette (1) selon la revendication 19,
**caractérisée par**
un embrayage (29) coaxial au vilebrequin (27).

13. Motocyclette (1) selon la revendication 12,
**caractérisée en ce que**
l'embrayage (29) est monté sur le vilebrequin (27).

14. Motocyclette (1) selon l'une des revendications 11 à 13,
**caractérisée en ce qu'**
un élément d'entraînement (28) de l'embrayage (29) est solidaire en rotation du vilebrequin (27) et qu'un élément entrainé (30) de l'embrayage (29) est disposé libre en rotation par rapport au vilebrequin (27), l'élément entraîné (30) étant relié à l'embrayage (29) au moyen d'un pignon primaire (31) monté à rotation sur le vilebrequin (27).

15. Motocyclette (1) selon la revendication 14,
**caractérisée en ce que**
l'élément entraîné (30) de l'embrayage (29) est une cage d'embrayage en une seule pièce avec le pignon primaire (31).

16. Motocyclette (1) selon la revendication 14 ou 15,
**caractérisée en ce que**
le pignon primaire (31) est positionné au moyen d'un palier à roulement (32) sur le vilebrequin (27).

17. Motocyclette (1) selon l'une des revendications 14 à 16,
**caractérisée en ce que**
le pignon primaire (31) engrène avec une roue intermédiaire (35') montée sur un arbre intermédiaire (33) en position décalée par rapport au vilebrequin (27).

18. Motocyclette (1) selon la revendication 17,
**caractérisée en ce qu'**
en vue de côté de la motocyclette (1), le contour extérieur de l'embrayage (29) s'étend jusqu'à la zone de l'arbre intermédiaire (33) mais pas jusque dans la zone de l'arbre de sortie de boîte (35).

19. Motocyclette (1) selon la revendication 17 ou 18,
**caractérisée en ce que**
la roue intermédiaire (35') est couplée en rotation à une roue dentée (36) d'un arbre d'entrée de boîte de vitesses (34) décalé dans la direction du bras oscillant de roue arrière (11) par rapport à l'arbre intermédiaire (33).

20. Motocyclette (1) selon l'une des revendications précédentes,
**caractérisée en ce que**
l'arbre d'entrée de boîte de vitesses (34) et l'arbre de sortie de boîte de vitesses (35) portent plusieurs roues dentées (37, 40) de rapports de vitesses commutables en prise les unes avec les autres.

21. Motocyclette (1) selon l'une des revendications précédentes,
**caractérisée en ce que**
le cadre a au moins deux tubes de cadre gauches (6, 7) se coupant et au moins deux tubes de cadre droits (6', 7') se coupant et l'axe d'oscillation (10) traverse le point d'intersection des tubes de cadre gauches (6, 7) et le point d'intersection des tubes de cadre droits (6', 7').

22. Motocyclette (1) selon la revendication 21,
**caractérisée par**
un moteur (19) et le moteur (19) et la boîte de vitesses (20) sont disposés dans la zone comprise entre les tubes de cadre gauches et droits (6, 7, 6', 7').

23. Motocyclette (1) selon l'une des revendications précédentes,
**caractérisée en ce que**
le cadre (5) a un tube de cadre inférieur gauche et droit (7, 7') qui, en vue de côté de la motocyclette (1), sont essentiellement rectilignes et s'étendent à partir de l'axe oscillant (10) vers l'avant, vers le haut, dans une zone en dessous du guidon (8) de la motocyclette (1).

24. Motocyclette (1) selon la revendication 23,
**caractérisée en ce que**
le cadre (5) présente un tube de cadre supérieur gauches et droits (6, 6') qui sont disposés au-dessus des tubes de cadre inférieurs (7, 7') et qui s'étendent à partir d'une zone en dessous du guidon (8) vers l'axe oscillant (10) vers l'arrière, et vers le bas.

25. Motocyclette selon la revendication 24,
**caractérisée en ce que**
les tubes de cadre supérieurs (6, 6') sont cintrés.

26. Motocyclettes selon l'une des revendications précédentes,
**caractérisée par**
un radiateur (21) disposé dans une zone en dessous des tubes de cadre inférieurs (7, 7') et devant le moteur (19).

27. Motocyclette selon l'une des revendications 24 à 26,
**caractérisée par**
un filtre à air (23) disposé dans une zone à proximité du guidon entre les tubes de cadre gauches et droits (6, 7, 6', 7') et entre les tubes de cadre supérieurs et inférieurs (6, 6' ; 7, 7').

28. Motocyclette selon l'une des revendications 24 à 27,
**caractérisée par**
une batterie (26) dans une zone à proximité de l'axe d'oscillation entre les tubes de cadre inférieurs et supérieurs (6, 6' ; 7, 7') au-dessus de la boîte de vitesses.

29. Motocyclette (1) selon l'une des revendications précédentes,
**caractérisée par**
une jambe de force (18) entre le bras oscillant de roue arrière (11) et le cadre (5), cette jambe de force assurant l'amortissement et la suspension du bras oscillant (11) par rapport au cadre (5).

30. Motocyclette (1) selon la revendication 29,
**caractérisée en ce qu'**
en vue de côté de la motocyclette (1) les segments avant (6a) des tubes de cadre supérieurs (6, 6') sont dans l'alignement de l'axe longitudinal de la jambe de force à ressort (19). -

31. Motocyclette (1) selon l'une des revendications 29 ou 30,
**caractérisée par**
un réservoir de carburant (24) disposé dans une zone au-dessus de la jambe de force à ressort (18) et en dessous de la selle (25) de la motocyclette (1).

32. Motocyclette (1) selon la revendication 21,
**caractérisée en ce que**
le réservoir de carburant (24) a un couvercle de réservoir sur sa face supérieure qui est accessible en soulevant la selle (25).
